Europäisches Patentamt

European Patent Office

Office européen des brevets

(19)

(11) EP 1 514 680 A1

(12) EUROPEAN PATENT APPLICATION
published in accordance with Art. 158(3) EPC

(43) Date of publication:
16.03.2005 Bulletin 2005/11

(51) Int Cl.⁷: **B32B 27/00**, B32B 7/02,
C09D 4/00, C09D 11/10,
B41M 1/00

(21) Application number: 03733261.6

(22) Date of filing: 03.06.2003

(86) International application number:
**PCT/JP2003/006985**

(87) International publication number:
**WO 2003/103953 (18.12.2003 Gazette 2003/51)**

(84) Designated Contracting States:
AT BE BG CH CY CZ DE DK EE ES FI FR GB GR
HU IE IT LI LU MC NL PT RO SE SI SK TR

(30) Priority: 05.06.2002 JP 2002163688
30.09.2002 JP 2002286118

(71) Applicants:
• TOYO INK MFG. CO., LTD.
Tokyo 104-0031 (JP)
• Matsui Chemical Co., Ltd.
Kyoto-shi, Kyoto 612-8374 (JP)

(72) Inventors:
• HIROSE, Takeshi, c/o Toyo Ink MFG. Co., Ltd
Chuo-ku, Tokyo 104-0031 (JP)

• KIZAKI, Akihiko, c/o Toyo Ink MFG. Co., Ltd.
Chuo-ku, Tokyo 104-0031 (JP)
• SATO, Keiichi, c/o Toyo Ink MFG. Co., Ltd.
Chuo-ku, Tokyo 104-0031 (JP)
• OIZUMI, Kei, c/o Toyo Ink MFG. Co., Ltd.
Chuo-ku, Tokyo 104-0031 (JP)
• HARADA, Sanji, c/o Toyo Ink MFG. Co., Ltd.
Chuo-ku, Tokyo 104-0031 (JP)
• NANBA, Masataka, c/o Matsui Chemical Co., Ltd.
Kyoto-shi, Kyoto 612-8374 (JP)

(74) Representative: Modiano, Guido, Dr.-Ing. et al
Modiano, Josif, Pisanty & Staub,
Baaderstrasse 3
80469 München (DE)

(54) **SHRINK FILM, PROCESS FOR PRODUCING THE SAME, PRINTING INK, PRINT PRODUCED THEREWITH AND PROCESS FOR PRODUCING PRINT**

(57) A coating material of an electron beam curable type is printed or coated onto a substrate of a heat shrinkable plastic film. Then, the coating material is cured by electron beam irradiation to form a coating layer. As a consequence, a shrinkable film including the substrate and the coating layer disposed thereon is obtained.

EP 1 514 680 A1

**Description**

[Technical Field]

The present invention relates to a shrinkable film and manufacturing method thereof, which allow an ink to be printed or an adhesive, pressure sensitive adhesive, or varnish to be coated on the film, without any unnecessary shrinkage of the film, before the finishing heat shrinkage. The present invention also relates to a printing ink suitable for a high concentration printed matter, a printed matter using the same, and a method of manufacturing such a printed matter.

[Background Art]

Conventionally, shrinkable films are widely used for various containers typified by plastic bottles, and other articles. The following explanation will be given of containers, taken as examples. A shrinkable film bears on its surface a print about the content, manufacturer name, trade name, or picture, and an adhesive or pressure sensitive adhesive for attaching it to a container. Where a shrinkable film label is provided on a container, such as a plastic bottle, a shrinkable film is shaped into a cylindrical body. The cylindrical body is then put over the container, or stuck as an adhesive label on the container. Then, the container is heated to shrink the film, thereby closely fitting the film to the container.

However, in general, after a coating material, such as an ink, adhesive, or varnish, is printed or coated on a shrinkable film, the film is once heated in a drying step to evaporate a solvent or water. The film is thereby thermally crinkled or warped before the finishing step used for heat shrinkage of the film. As a consequence, the printed image is deformed or the adhesiveness of the film to a container becomes insufficient, thereby losing the value of the product. Also in the case of ultraviolet cure printing, the same problem arises due to heat rays generated by an ultraviolet ray irradiation apparatus. In order to solve this problem, it is necessary to take countermeasures, as follows. Specifically, Jpn. Pat. Appln. KOKAI Publication No. 2001-239739 discloses a technique in which a non-shrinkable or hardly-shrinkable film is laminated onto a shrinkable film; and printing is then performed. Jpn. Pat. Appln. KOKAI Publication No. H05-42756 discloses a technique in which a cooling blow is applied onto a print surface to prevent heat shrinkage.

On the other hand, in the contemporary society, printing techniques are indispensable for mass reproduction of character information or image information. The printing techniques include various types in accordance with intended uses or printed matters, and various printing inks are respectively used for these types.

Of them, screen printing or gravure printing is usually used for printed matters that require printed images to have relatively high concentration feeling, i.e., high concentration printed matters.

Screen printing performs printing by transferring an ink onto a substrate through a screen plate that has an ink passage portion with an image pattern. Screen printing has characteristics, as follows. (1) A relatively thick ink film of from 10 to 100 μm can be formed by adjusting the screen line density (in general it is controlled by the number of lines per inch). (2) A relatively high viscosity ink is usable, and thus its ink can contain additive agents, such as a pigment, in excessive quantities, without losing printing suitability. Because of these characteristics, screen printing is mainly used for cases where high print concentration or hiding property is required. For example, this may be exemplified by signboards, game machines, and sample can dummy bodies used in vending machines.

On the other hand, gravure printing performs printing by transferring an ink onto a substrate from a metal cylinder that has a surface with ink holding cells patterned by etching. Gravure printing is mainly characterized in that a high-speed production at 300m per minute can be performed with a low viscosity ink that uses a solvent or water as a medium and contains a small amount of resin. Gravure printing is known as a type that allows the print image quality to be adjustable to obtain a continuous tone effect by changing the depth of the cells, and can provide printed matters with high concentration feeling. Furthermore, since gravure printing has relatively broad options in choosing an ink resin in accordance with a required degree of adhesiveness to a substrate film, it can be applied to printing on various films. The thickness of an ink layer is typically about 3 to 10 μm in gravure printing.

However, screen printing entails problems mainly due to thick layer printing, as follows. (1) The printing speed cannot be high, resulting in low productivity. (2) A large amount of ink is consumed due to a thick layer and the price of the ink itself is high, so the ink cost is high in total. (3) It takes a long time to dry and cure an ink due to a thick layer. (4) An ink layer is thick and thus cannot follow a film or the like to which the ink layer is applied, so it may separate from the film or crack.

On the other hand, gravure printing also entails several problems, as follows. (1) Gravure printing machines are large-scaled and directed to printing for a large width, high-speed, and mass production, and are not suitable for "large item small lot production" that has become popular in recent years. (2) Manufacture of a metal cylinder printing plate requires a high cost and a long delivery date. (3) Since a large amount of solvent or water is contained in an ink, the printing requires a lot of energy or space in drying the ink, resulting in a certain ecological cost in a posttreatment or the like.

[Disclosure of Invention]

An object of the present invention is to provide a shrinkable film and manufacturing method thereof, in which the shrinkable film is not crinkled or warped, without any special countermeasures as described above, before the finishing step of closely fitting it to a container by heat shrinkage.

Another object of the present invention is to provide a printing ink for high concentration printing, which allows high concentration printed matters to be formed with a thin layer, high productivity, and low cost; can be suitable for "large item small lot production"; needs less drying and curing time and energy; requires a smaller ecological cost; and allows a printed ink layer to have high physical properties. Still another object of the present invention is to provide a printed matter using such a printing ink, and manufacturing method thereof.

According to a first aspect of present invention, there is provided a shrinkable film comprising a substrate of a heat shrinkable plastic film, and a coating layer formed from a coating material of an electron beam curable type printed or coated on the substrate and cured by electron beam irradiation.

According to a second aspect of present invention, there is provided a method of manufacturing a shrinkable film, comprising: printing or coating a coating material of an electron beam curable type onto a substrate of a heat shrinkable plastic film; and irradiating the printed or coated coating material with an electron beam, thereby curing the coating material.

As described above, a shrinkable film is obtained by utilizing electron beam irradiation to cure a coating material printed or coated on a substrate of a heat shrinkable plastic film. As a consequence, the shrinkable film is not crinkled or warped, without any special countermeasures, before the finishing step of closely fitting it to a container by heat shrinkage.

According to a third aspect of present invention, there is provided a method of manufacturing a shrinkable film, comprising: irradiating a substrate of a heat shrinkable plastic film with an electron beam, and then printing or coating a coating material onto the substrate.

As described above, a substrate of a heat shrinkable plastic film is irradiated with an electron beam before a coating material is printed or coated. As a consequence, the surface of the substrate is reformed, so that the adhesiveness between the substrate and coating material improves.

According to a fourth aspect of present invention, there is provided a printing ink for letterpress printing or lithographic printing, which is a printing ink to be cured by an electron beam and has a coloring component content falling in a range of from 20 to 70 mass%.

According to a fifth aspect of present invention, there is provided a printing ink for letterpress printing or lithographic printing, which is a printing ink to be cured by an electron beam and has a transmittance density of 0.3 or more as a yellow ink, 0.5 or more as a magenta ink, 0.7 or more as a cyan ink, or 0.6 or more as a black ink, where the ink is printed to have a thickness of 1 μm.

According to a sixth aspect of present invention, there is provided a printed matter comprising an article to be printed and an ink layer, wherein the ink layer is formed from a printing ink to be cured by an electron beam for letterpress printing or lithographic printing, which has a coloring component content falling in a range of from 20 to 70 mass%; and the printing ink is applied onto the article by letterpress printing or lithographic printing and is cured by irradiation with the electron beam to form the ink layer.

According to a seventh aspect of present invention, there is provided a printed matter comprising an article to be printed and an ink layer, wherein the ink layer is formed from a printing ink to be cured by an electron beam for printing or lithographic printing, which has a transmittance density of 0.3 or more as a yellow ink, 0.5 or more as a magenta ink, 0.7 or more as a cyan ink, or 0.6 or more as a black ink, where the ink is printed to have a thickness of 1 μm; and the printing ink is applied onto the article by letterpress printing or lithographic printing and is cured by irradiation with the electron beam to form the ink layer.

According to an eighth aspect of present invention, there is provided a method of manufacturing a printed matter, comprising: printing with a printing ink onto an article to be printed by letterpress printing or lithographic printing, the printing ink being a printing ink to be cured by an electron beam for letterpress printing or lithographic printing, which has a coloring component content falling in a range of from 20 to 70 mass%; and irradiating an ink layer thus printed with the electron beam, thereby curing the ink layer.

According to a ninth aspect of present invention, there is provided a method of manufacturing a printed matter, comprising: continuously printing with different color printing inks onto an article to be printed to perform multicolor printing by letterpress printing or lithographic printing, each of the printing inks being a printing ink to be cured by an electron beam for letterpress printing or lithographic printing, which has a coloring component content falling in a range of from 20 to 70 mass%; and irradiating ink layers of the printing inks with the electron beam after forming all of the ink layers of the printing inks, thereby curing the ink layers.

According to a tenth aspect of present invention, there is provided a method of manufacturing a printed matter, comprising: printing with a printing ink onto an article to be printed by letterpress printing or lithographic printing, the printing ink being a printing ink to be cured by an electron beam for letterpress printing or lithographic printing, which has a transmittance density of 0.3 or more as a yellow ink, 0.5 or more as a magenta ink, 0.7 or more as a cyan ink, or 0.6 or more as a black ink, where the ink is printed to have a thickness of 1 μm; and irradiating an ink layer thus printed with the electron beam, thereby curing the ink layer.

According to an eleventh aspect of present invention, there is provided a method of manufacturing a printed matter, comprising: continuously printing with different color printing inks onto an article to be printed to perform multicolor printing by letterpress printing or lithographic printing, each of the printing inks being a printing ink to be cured by an electron beam for letterpress printing or lithographic printing, which has a transmittance density of 0.3 or more as a yellow ink, 0.5 or more as a magenta ink, 0.7 or more as a cyan ink, or 0.6 or more as a black ink, where the ink is printed to have a thickness of 1 μm; and irradiating ink layers of the printing inks with the electron beam after forming all of the ink layers of the printing inks, thereby curing the ink layers.

The fourth to eleventh aspects of the present invention are based on such findings by the present inventors, that the objects described above can be achieved, if an ink is set to have a coloring component concentration as high as possible and to be cured by an electron beam, where letterpress printing or lithographic printing, which typically provides a printed ink layer having a thin thickness of 5 μm or less, is employed.

Letterpress printing and lithographic printing allow a printing plate to be manufactured with a low cost and a short delivery date, and allow lots of printed matters, which may vary in width, to be flexibly treated without restriction raised by the lots. Accordingly, they have merits in that they can form an ink layer with good productivity and a low cost, they can be suited for "large item small lot production", and they can provide beautiful full color process printing. However, in principle, the ink layer of letterpress printing and lithographic printing has a thickness of from about 1 to 3 μm, and thus, there is a stereotype that they cannot provide high concentration printed matters. For this reason, letterpress printing and lithographic printing have essentially not been applied to high concentration printed matters, so far. Instead, there is only an existing technique in which the same pictures are printed two or three times or more, in order to increase concentration feeling, if possible. In this case, however, the productivity decreases, as a matter of course.

Under the circumstances described above, the present inventors have found the following matters and arrived at constitutions according to the present invention, as described above. Specifically, even where letterpress printing or lithographic printing is employed, if an ink is set to have a coloring component concentration as high as possible, a thin ink layer can have increased concentration feeling to perform high concentration printing. Furthermore, if the ink is set to be cured by irradiation with an electron beam, the ink can be cured in a short time while maintaining high ink physical properties, even where the coloring component concentration therein is high, as described above. With the arrangements described above, it is possible to provide a printing ink for high concentration printing, which needs less drying and curing time and energy and requires a smaller ecological cost, in addition to the essential merits of letterpress printing or lithographic printing been kept. Namely, letterpress printing and lithographic printing can form an ink layer with good productivity and a low cost, they can be suited for "large item small lot production", and so forth.

[Brief Description of Drawings]

FIG. 1 is a view showing the relationship between electron beam penetration depth and irradiation dose observed at acceleration voltages of from 50 to 80 kV;

FIG. 2A is a side view showing the structure of an irradiation tube employed in an electron beam irradiation apparatus for forming layers; and

FIG. 2B is a bottom view showing the structure of the irradiation tube employed in the electron beam irradiation apparatus for forming layers.

[Best Mode for Carrying Out the Invention]

Embodiments of the present invention will be specifically described hereinafter.

In the following explanation, the term "cure" means a concept including cross-linkage as well.

First, an explanation will be given of a shrinkable film according to the present invention.

A shrinkable film according to the present invention includes a substrate formed of a heat shrinkable plastic film, and a coating layer disposed thereon, which is formed from a coating material of the electron beam curable type printed or coated on the substrate, and then cured by electron beam irradiation.

The heat shrinkable plastic film for forming the substrate may be exemplified by a heat shrinkable film in general use, which is prepared by stretching a plastic film made of one of olefin resins, such as polyethylene and polypropylene, vinyl chloride resins, vinylidene chloride resins, polystyrene resins, polyester resins, polyamide resins, and other resins.

It is practicable to use the heat shrinkable plastic film having an anisotropic shrinkage percentage as described below, because no crinkles are formed thereon when it is used as an actual packaging material or label. Specifically, it is preferable for the film to have shrinkage percentages, at 100°C, of 40% or more in the horizontal direction (or TD; Transverse Direction), and 30% or less in the vertical direction (or MD; Machine Direction). The shrinkage percentage in the transverse direction is more preferably 45% or more, furthermore preferably 50% or more, and still furthermore preferably 60% or more. The shrinkage percentage in the machine direction is more preferably 20% or less, furthermore preferably 10% or less, and still furthermore preferably 5% or less.

The coating material of the electron beam curable type according to the present invention can be printed or coated on one or both of the front and rear surfaces of the heat shrinkable plastic film.

The coating material of the electron beam curable type for forming the coating layer may be exemplified by an ink, adhesive, pressure sensitive adhesive, varnish, and so forth. The constituent of such a coating material may be exemplified by vinyl type monomers, allyl type monomers, and acrylate type or methacrylate type (which will be referred to as a (meta)-acrylate type, hereinafter) monomers, which are mono-functional monomers and/or two or more functional monomers that have an $\alpha,\beta$-unsaturated double bond in one molecule, in general. There is a case where a (meta)-acrylate type monomer has a functional group other than an $\alpha,\beta$-unsaturated double bond. A mono-functional monomer may be used alone or along with a two or more functional monomer to adjust a cross-linkage density.

The vinyl type monomers may be exemplified by styrene, $\alpha$-methyl styrene, divinyl benzene, N-vinyl pyrrolidone, vinyl acetate, alkyl vinyl ether, and the like. The allyl type monomers may be exemplified by trimethacrylate isocyanurate, triallyl cyanurate, and the like.

The (meta)-acrylate type monomers having the multi-functional group of may be exemplified by alkylene glycol di(meta)-acrylate's, e.g., 1,6-hexanediol di(meta)-acrylate, neopentyl glycol di(meta)-acrylate, and polyethylene glycol di(meta)-acrylate; tri(meta)-acrylate's, e.g., trimethylolpropane tri(meta)-acrylate, and pentaerythritol tri(meta)-acrylate; tetra(meta)-acrylate's, e.g., ditrimethylolpropane tetra(meta)-acrylate, and pentaerythritol tetra(meta)-acrylate; aliphatic (meta)-acrylate's, e.g., dipentaerythritol hexa(meta)-acrylate; alicyclic (meta)-acrylate's, e.g., dicyclopentadienel di(meta)-acrylate; and aromatic (meta)-acrylate's, e.g., ethoxylated bisphenol-A diacrylate, and ethoxylated bisphenol-F diacrylate.

The (meta)-acrylate type monomers having the mono-functional group may be exemplified by alkyl (meta)-acrylate's, e.g., ethyl (meta)-acrylate, butyl (meta)-acrylate, and lauryl (meta)-acrylate; alkoxyalkylene glycol (meta)-acrylate's, e.g., methoxydipropylene glycol acrylate, and ethoxydiethylene glycol acrylate; aliphatic (meta)-acrylate's, e.g., N,N-dimethylaminoethyl (meta)-acrylate; alicyclic (meta)-acrylate's, e.g., cyclohexyl (meta)-acrylate, tetrahydrofurfuryl (meta)-acrylate, and isobornyl (meta)-acrylate; aromatic (meta)-acrylate's, e.g., phenyl (meta)-acrylate, benzyl (meta)-acrylate, phenoxyethyl (meta)-acrylate, and phenoxydiethylene glycol (meta)-acrylate.

The (meta)-acrylate's having a functional group other than $\alpha,\beta$-unsaturated double bond may be exemplified by (meta)-acrylate's having a hydroxyl group, such as hydroxyalkyl (meta)-acrylate's, e.g., 2-hydroxyethyl (meta)-acrylate, 2-hydroxypropyl (meta)-acrylate, and 2-hydroxybutyl (meta)-acrylate; alkoxyhydroxyalkyl (meta)-acrylate; hydroxyalkyl di(meta)-acrylate; hydroxyl-alkylated - trimethylolpropane tri(meta)-acrylate; and monohydroxy pentaerythritol tri(meta)-acrylate. The (meta)-acrylate's having a functional group other than $\alpha,\beta$-unsaturated double bond may be also exemplified by allyl acrylate's having an allyl group; glycidyl (meta)-acrylate's having a glycidyl group; acrylic acids, methacrylic acids and monoacryloxy succinate ester's, which have a carboxyl group; and ethyleneoxide-modified phosphate (meta)-acrylate, and ethyleneoxide-modified alkoxyphosphate (meta)-acrylate, which have a phosphate group.

Another (meta)-acrylate may be exemplified by silicon-modified (meta)-acrylate's having an Si atom; fluorine-modified (meta)-acrylate's having an F atom; tetrabromobisphenol-A di(meta)-acrylate, and tetrachlorobisphenol-A di(meta)-acrylate, which have an halogen atom; phosphazene resin containing a (meta)-acrylyl group, which has a P atom; and tris(acryloxyethyl) isocyanurate.

Monomers mentioned in the present invention mean to include so called monomers in a narrow sense, as described above, which have a relatively low molecular weight, such as a weight-average molecular weight of less than 1000, and also include oligomers and pre-polymers, which have a relatively high molecular weight, such as a weight-average molecular weight of not less than 1000 but less than 10000. Oligomers having an $\alpha, \beta$-unsaturated double bond may be exemplified by polyester (meta)-acrylate, polyurethane (meta)-acrylate, epoxy (meta)-acrylate, and (meta)-acrylated maleic-acid-modified polybutadiene.

A thermoplastic resin may be used along with a monomer, oligomer and/or pre-polymer, as that described above. The thermoplastic resin may be exemplified by polymers, such as acrylic resin, polyester resin, polycarbonate resin, polyacetal resin, polyurethane resin, alkyd resin, polyvinylbutyral resin; and graft polymers such as acrylic-urethane resin and acrylic-polyester resin. These polymers may be used alone or by mixture of two or more types.

For coloring of an ink or paint, a coloring agent, such as a pigment or dye, is used while it is dispersed in a binder resin. The pigment can be a pigment in popular use, and, particularly where light resistance or weather resistance is required, it may be a pigment exemplified by organic pigments, such as quinacridone's, anthraquinone's, perylene's, perynone's, diketopyrrolopyrrole's, isoindolinone's, condensed azo's, benzimidazolone's, monoazo's, insoluble azo's, naphthol's, flavanthrone's, anthrapyrimidine's, quinophthalone's, pyranthrone's, pyrazolone's, thioindigo's, anthanthrone's, dioxazine's, phthalocyanine's, and indanthrone's. The pigment may be also exemplified by inorganic pigments, such as metal complexes, e.g., nickel dioxyn yellow and copper azomethine yellow; metal oxides, e.g., titanium oxide, iron oxide, and zinc oxide; metal salts, e.g., barium sulfate and calcium carbonate; carbon black; aluminum; and mica. In order to provide metallic feeling or pearl feeling, metal fine powder, such as aluminum, or mica fine powder may be used. The dye may be exemplified by azo's, quinoline's, stilbene's, thiazole's, indigoid's, anthraquinone's, oxazine's and so forth.

The binder resin may be exemplified by monomers, oligomers, pre-polymers, thermoplastic resins, and thermosetting resins, as those described above. They may be used alone or by mixture of two or more types. Each of acrylic resin and polyurethane resin used as a thermoplastic resin preferably has a high weather resistance. For this acrylic resin, it is preferable to use a resin that has a polar group or functional group providing a high pigment dispersibility, or contains styrene as one of copolymer components and as an essential component. A polar group providing high pigment dispersibility may be exemplified by functional groups, such as a hydroxyl group, carboxyl group, thiol group, amino group, amide group, and ketone group. A bond providing high pigment dispersibility may be exemplified by bonds, such as urethane, urea, and ester.

A pressure sensitive adhesive usually used when a shrinkable film is used as a shrink label may be prepared to be a pressure sensitive adhesive of the electron beam curable type, aqueous emulsion type, water-soluble type, delayed tack type, hot-melt type, no-solvent type, organic solvent type, or the like. Hereinafter, ordinary pressure sensitive adhesives means pressure sensitive adhesives of the aqueous emulsion type, water-soluble type, delayed tack type. hot-melt type, no-solvent type, organic solvent type, and so forth, other than the electron beam curable type. Accordingly, a pressure sensitive adhesive mentioned hereinafter includes pressure sensitive adhesives of the electron beam curable type and ordinary pressure sensitive adhesives. A pressure sensitive adhesive of delayed tack type contains a solid plasticizer, thermoplastic resin, and tackifier, as the basic components. Of them, the thermoplastic resin is the root of adhesive force and adhesive force. The solid plasticizer is in a solid phase at normal temperatures and hardly provides the resin with plasticity, but it is melted and swells or softens the resin when heated. Accordingly, the solid plasticizer has the function of causing a thermosensitive adhesive, which is not tacky at normal temperatures, to become adhesive when heated. At this time, if the pressure sensitive adhesive contains a tackifier, it more remarkably shows tackiness, and thus becomes more useful.

A printing ink or paint, adhesive, pressure sensitive adhesive, or varnish of the electron beam curable type to be coated may contain an additive agent of every kind, such as a leveling agent, antifoaming agent, antiblocking agent, adhesive assistant agent, dispersing agent, dryness adjusting agent, abrasion proof agent, ultraviolet absorption agent, ultraviolet stabilizing agent, slip-property improving agent, or trapping-property improving agent, as needed.

In order to ensure a dispersing of a coloring agent and moderate viscosity, it may contain a solvent by an amount that does not affect the shrinkable film in a drying step. The solvent may be exemplified by ketonic compounds, e.g., acetone, methylethyl ketone, and cyclohexanone; ester compounds, e.g., methyl acetate, ethyl acetate, butyl acetate, ethyl lactate, and methoxyethyl acetate; ether compounds, e.g., diethyl ether, ethylene glycol dimethyl ether, and dioxane; aromatic compounds, e.g., toluene and xylene; aliphatic compounds, e.g., pentane and hexane; halogenated carbon hydride compounds, e.g., methylene chloride, chloro benzene, and chloroform; alcohols, e.g., ethanol, isopropyl alcohol, and butylcellosolve; and water.

In order to ensure a dispersing of a coloring agent and a moderate viscosity, it may contain a solvent by an amount that does not affect the substrate or underlaying layer in a drying step. The solvent may be exemplified by a ketonic compound, ester compound, ether compound, aromatic compound, aliphatic compound, halogenated carbon hydride compound, alcohol, and water.

A method for printing or coating a printing ink, pressure sensitive adhesive, adhesive, or varnish of the electron beam curable type onto a substrate may be exemplified by typical printing methods such as regular gravure printing, offset printing, silk screen printing, and letterpress printing, and also on-demand printing methods, such as ink jet printing. The coating method may be exemplified by a gravure coat method, reverse coat method, kiss coat method, dye coat method, lip coat method, comma coat method, blade coat method, roll coat method, knife coat method, curtain coat method, slot orifice method, and spray coat method. The coating may be performed by one step or several steps. The coating may be performed by combination of different methods.

After a coating layer of the electron beam curable type is coated on a substrate, it is irradiated with an electron beam to obtain a shrinkable film according to the present invention. The layer, such as a printing ink layer, adhesive layer, pressure sensitive adhesive layer, or varnish layer, is efficiently cured and dried by electron beam irradiation.

The present invention also includes reformation of the surface of a substrate by irradiating the substrate with an electron beam, before a coating material of the electron beam curable type (an ink, adhesive, pressure sensitive adhesive, varnish, or the like) is printed or coated on the substrate. This improves the adhesiveness between a film and an ink, adhesive, pressure sensitive adhesive, or varnish.

Where reformation of the surface of a substrate is performed by electron beam irradiation on the substrate, the coating material of a layer, such as print layer, adhesive layer, pressure sensitive adhesive layer, or varnish layer, may be exemplified by coating materials of the electron beam curable type described above, coating materials of other no-solvent types, e.g., ultraviolet curable type, and coating materials of solvent types other than the electron beam curable type and ultraviolet curable type.

An electron beam used for irradiation in the present invention is preferably set at an acceleration voltage of 120 kV or less, and more preferably at 100 kV or less, so that a print layer, adhesive layer, pressure sensitive adhesive layer, or varnish layer is efficiently cured and dried, or an underlaying substrate is less damaged when surface reformation is performed on the substrate. Furthermore, in consideration of the typical layer thickness of an ink, adhesive, pressure sensitive adhesive, or varnish, the acceleration voltage is furthermore preferably set at 80 kV or less, and particularly to fall in a range of from 10 to 80 kV.

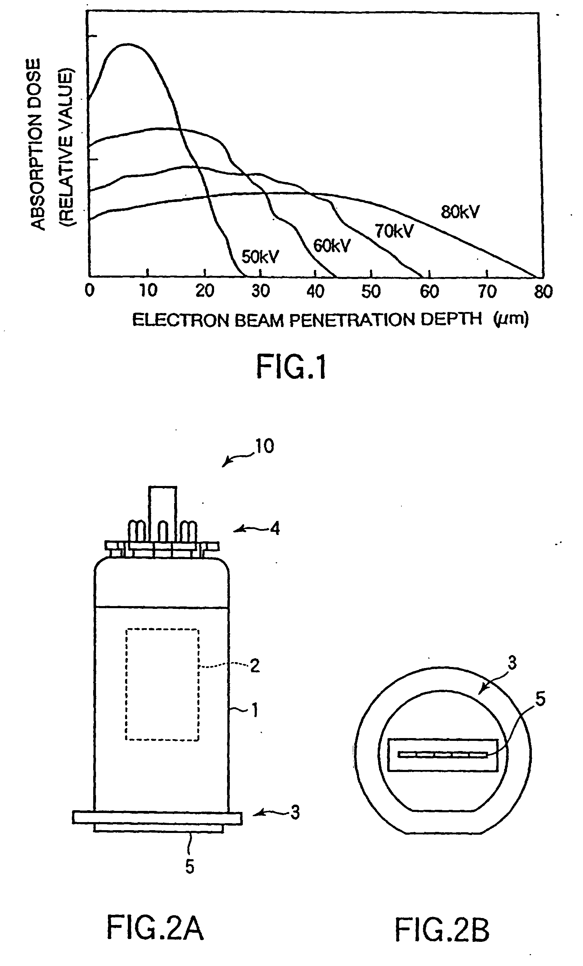

An electron beam can be utilized such that the substrate of a shrinkable film is irradiated with the electron beam, so that cross-linkage is caused therein to increase the strength of the substrate (for example, see Jpn. Pat. Appln. KOKAI Publication No. 2000-148020). In this case, however, if irradiation with an electron beam having high penetration ability is excessively performed, while disregarding the acceleration voltage, the shrinkage performance is deteriorated, or the strength of the substrate is adversely reduced. Accordingly, it is preferable to choose an acceleration voltage in consideration of the relationship between the acceleration voltage and electron beam penetration depth, so that a print layer, adhesive layer, pressure sensitive adhesive layer, or varnish layer disposed on the surface of a substrate is efficiently cured and dried, or the surface layer of a substrate is efficiently reformed, when a shrinkable film is manufactured. FIG. 1 is a view showing the relationship between electron beam penetration depth and absorption dose (relative value) observed at acceleration voltages of from 50 to 80 kV. With reference to the relationship shown in FIG. 1, the acceleration voltage is preferably chosen to set the electron beam penetration depth at a necessary value.

The irradiation dose of an electron beam is suitably chosen in accordance with the components of a coating layer and a processing speed, and is preferably set at 5 to 50 kGy, and more preferably at 10 to 30 kGy, in general.

An electron beam irradiation apparatus to be used may be exemplified by apparatuses of curtain beam type, area beam type, broad beam type, scanning beam type, vacuum tube type, and so forth. Of them, an electron beam irradiation apparatus of the vacuum tube type is preferably employed in order to efficiently perform electron beam irradiation, as described above. An electron beam irradiation apparatus of the vacuum tube type includes an irradiation tube 10 used as an electron beam generator, as shown in FIGS. 2A and 2B. Specifically, as shown in FIG. 2A, it includes a cylindrical vacuum tube 1 made of glass or ceramic; an electron beam generating portion 2 disposed in the vacuum tube 1 serving to draw out electrons emitted from an cathode and accelerate the electrons so as to generate an electron beam; an electron beam emitting portion 3 disposed at an end of the vacuum tube 1 to emit the electron beam; and a pin portion 4 to which electricity is supplied from a power supply, which is not shown. The electron beam emitting portion 3 is provided with a thin film radiation window 5. The radiation window 5 of the electron beam emitting portion 3 does not allow any gas to pass therethrough, but allows the electron beam to pass therethrough. As shown in FIG. 2B, the radiation window 5 has a shape like a slit. An irradiation target is placed in an irradiation chamber and irradiated with the electron beam radiated from the radiation window 5.

Such an electron beam irradiation apparatus of the vacuum tube type is fundamentally different from an electron beam irradiation apparatus of the conventional drum type. An electron beam irradiation apparatus of the conventional drum type performs electron beam irradiation while keeping the interior of a drum vacuum-exhausted. The vacuum tube type does not require this vacuum-exhaust.

An apparatus having an irradiation tube of this structure is disclosed in U.S. Patent No. 5,414,267, and known as a Min-EB apparatus from Ushio International Technologies (UIT), Inc. This apparatus less decreases the penetration ability of an electron beam and can effectively draw out an electron beam, even at a low acceleration voltage. Accordingly, an electron beam can act with a small penetration depth, so that a print layer, adhesive layer, pressure sensitive adhesive layer, or varnish layer disposed on the surface of a substrate is efficiently cured and dried, or only the surface layer of a substrate is reformed without damaging the inside of the substrate. Furthermore, this electron beam irradiation apparatus of the vacuum tube type can reduce generation of secondary electron beams, due to characteristics of a low acceleration voltage and low energy, and thus advantageously eliminate the use of a large-scale shielding structure.

Next, an explanation will be given of a printing ink according to the present invention.

A printing ink according to the present invention is an ink for letterpress printing or lithographic printing, and is curable by an electron beam. The ink has a coloring component content falling in a range of from 20 to 70 mass%.

A printing ink according to the present invention is an ink to be cured by an electron beam, and typically an electron beam curable ink. There are various types of the ink, such as process inks of yellow, magenta, cyan, and black for full color printing, special color inks that allow various effective color schemes, gold ink and silver ink for rendering gloss, fluorescent ink; and so forth.

A printing ink according to the present invention is basically an ink for letterpress printing or lithographic printing. Of them, letterpress printing performs printing by pressing an ink directly onto a paper surface and transferring it from a letterpress printing plate face. Letterpress printing includes flexo printing as well as ordinary letterpress printing. Flexo printing is a method in which an elastic printing plate, such as a rubber letterpress printing plate or photosensitive resin letterpress printing plate, is used and printing is performed with a liquid and quick-drying ink. Lithographic printing performs printing while alternately supplying an oleophilic ink and dampening water onto a printing face that has oleophilic image portions and hydrophilic non-image portions. Lithographic printing includes offset printing in which an ink on a printing plate face is once transferred onto a rubber blanket surface, and is then transferred onto an article surface to be printed. Furthermore, it is possible to adopt waterless lithographic printing without any dampening water. These printing methods are to form a thin ink layer in principle, and ordinary letterpress printing and lithographic printing, such as offset printing, provide a layer of about 1 to 3 μm. Flexo printing can be performed by selecting an anilox roll for supplying an ink to a printing plate, so as to form a ink layer thicker than ordinary letterpress printing, such as a printed layer of about 5 μm in general.

The present invention is to perform high concentration printing that provides high concentration feeling even by a thin ink layer. In order to achieve this, letterpress printing or lithographic printing that forms a thin ink layer is employed, while the concentration of a coloring agent needs to increase to heighten the concentration feeling. For this reason, the coloring component content is set at 20 to 70 mass%, which is higher than usual. Where the concentration of a coloring component increases, the concentration feeling is heighten, because hiding properties relative to transmission light become higher. The coloring component content is preferably set to fall in a range of from 25 to 70 mass%, and more preferably of from 30 to 60 mass%. The thickness of an ink layer is preferably set at 5 μm or less in either monocolor or multicolor case.

Since letterpress printing or lithographic printing is used to form a thin ink layer, it is possible to remarkably reduce ink consumption, thereby significantly reducing the ink cost in printing, as compared to gravure printing or screen printing. Furthermore, a thin ink layer can follow shapes better than a thick ink layer, ink separation or cracking hardly occurs.

As an index of coloring component concentration, transmittance density can be used other than mass basis concentration described above. In the present invention, the transmittance density is used to express the coloring component concentration. Hereinafter, "transmittance density" is defined, as follows. Specifically, an ink is printed to have a thickness of 1 μm on a polyester film having a thickness of 50 μm by an RI tester (simplified printing machine), and is then cured, to form a printed matter. Then, the printed matter is irradiated with light to measure the transmittance density thereof, which is expressed by $D_\rho$ in the following equation (1), where $\Psi_\rho$ is incident light intensity, and $\Psi_{\rho o}$ is transmitted light intensity.

$$D_\rho = \log(\Psi_\rho / \Psi_{\rho o}) \tag{1}$$

It is preferable to use values of the incident light intensity $\Psi_\rho$ and transmitted light intensity $\Psi_{\rho o}$, obtained by a "Macbeth TR927" from Macbeth Co., Ltd., which is a concentration-measuring machine for both of transmittance and reflectance.

Provided that an ink thus printed has a thickness of 1 μm, values of the transmittance density are regulated to be 0.3 or more for yellow ink, 0.5 or more for magenta ink, 0.7 or more for cyan ink, and 0.6 or more for black ink. With this regulation, high concentration feeling or hiding properties can be obtained even by a thin ink layer of 5 μm or less. Preferably, values of the transmittance density are regulated to be 0.35 or more for yellow ink, 0.6 or more for magenta ink, 0.8 or more for cyan ink, and 0.7 or more for black ink.

Of the printing methods described above, flexo printing can form a thicker ink layer than ordinary letterpress printing and lithographic printing, such as offset printing, and thus can provide high concentration feeling or hiding properties, where the concentration of a coloring component is set higher.

Where the concentration of a coloring component contained is higher, ultraviolet curable inks are hardly cured to form an ink layer suitable for practical use. On the other hand, the present invention employs an electron beam curable ink, which can be cured in a short time without problems, and allows the ink layer to have high physical properties.

Specifically, unlike ultraviolet rays, the layer-penetration ability of an electron beam is not affected by the hue or concentration of ink layers. Accordingly, an electron beam curable ink can be cured without problems even where the concentration of a coloring component, such as a pigment, in an ink is set higher, at which ultraviolet curable inks can be hardly cured.

An electron beam entails no heat generation, and thus unlikely deforms or degrades a substrate. This is particularly advantageous in printing on a heat shrinkable film of polystyrene, polypropylene, or polyester, which is used as a shrink label for a plastic bottle or the like.

Furthermore, an electron beam has high penetration ability, and thus makes it possible not only to cure an ink layer in a short time, but also to obtain the following advantage. Specifically, where electron beam curable inks are used for multicolor process printing, respective color inks are not cured in each time, but are stacked by printing (which is called a wet-on-wet method), and are irradiated with an electron beam at the end, so that they are cured by one-time irradiation. This method remarkably contributes to improvement of productivity. As a printing machine suitable for this "wet-on-wet" printing, there is known a rotary printing machine of the Center Impression (CI) type in which a letterpress printing plate or lithographic plate for printing respective color inks is disposed around a center drum. In the case of the ultraviolet curable type, since ultraviolet rays have low penetration ability, each of the color inks needs to be cured after it is printed, and this inevitably brings about a decrease in productivity.

The main component of an electron beam curable ink used in the present invention is an electron beam curable compound made of single or plural kinds of monomers, oligomers, and pre-polymers, which cause radical polymerization or cationic polymerization by electron beam irradiation.

The electron beam curable compound may be exemplified by monomers, oligomers, and pre-polymers having an ethylene-type unsaturated double bond. More specifically, it may be exemplified by 2-hydroxyethyl (meta)-acrylate, ethylene glycol diacrylate, diethylene glycol diacrylate, 1,6-hexanediol di(meta)-acrylate, trimethylolpropane triacrylate, pentaerythritol triacrylate, and dipentaerythritol hexaacrylate. These electron beam curable compounds may be used alone or by mixture of two or more types, as needed.

Furthermore, if necessary, the ink may contain a thermosetting or thermoplastic resin having good compatibility with the electron beam curable compound. The thermosetting or thermoplastic resin may be exemplified by polyvinyl chloride, poly(meta)-acrylic ester, epoxy resin, polyurethane resin, cellulosic (for example, ethyl cellulose, accetyl cellulose, and nitro cellulose), vinyl chloride-vinyl acetate copolymer, polyamide resin, polyvinyl acetal resin, diallyl phthalate resin, synthetic rubber, e.g., butadiene-acrylonitrile copolymer, and so forth. These resins may be used alone or by mixture of two or more types.

Other than the main component described above, the printing ink components include a coloring component. The coloring component may be either dye or pigment. The pigment may be exemplified by inorganic pigments, such as titanium oxide, zinc flower, iron oxide, carbon black, iron blue, and cobalt blue; and organic pigments, such as quinacridone family organic pigments, phthalocyanine family organic pigments, benzimidazolone family organic pigments, isoindolynone family organic pigments, and azo family organic pigments.

Specific examples of the coloring component for respective colors are as follows. Examples of a yellow coloring agent may be disazo yellow's, hansa yellow's, vulcan fast yellow's, benzine yellow's, chromophtalic yellow's, and so forth. Examples of a magenta coloring agent may be hansa red's, permanent red's, watcher red's, lake red's, brilliant carmine's, rhodamine's, and so forth. Examples of a cyan coloring agent may be phthalocyanine's and so forth. An example of a black ink may be carbon black. Examples of a green coloring agent may be phthalocyanine green's. Examples of an orange coloring agent may be permanent red's. Examples of a purple coloring agent may be dioxazine violet's. Furthermore, examples of a white pigment may be titanium oxide and so forth, which can be used as a hiding layer for an underlaying, or the like.

Where the white pigment described above or a metal pigment, such as an aluminum powder, is used as a coloring component, the coloring component content in the ink is preferably set to fall in a range of from 40 to 70 mass%. Other than this case, the coloring component content is preferably set to fall in a range of from 20 to 50 mass%. More preferably, the ranges described above are set to be 45 to 60 mass%, and 30 to 45 mass%, respectively. The coloring component does not include extender pigments, but an ink may contain a body pigment along with the coloring component.

In the case of a conventional ultraviolet curable ink, which is used in offset printing included in lithographic printing methods and resin letterpress printing included in letterpress printing methods, where the occupancy ratio of a pigment component is set higher, the following problems arise. Specifically, since the affinity between the binder components, particularly the resin component, and the pigment component is insufficient, the ink significantly looses suitability necessary for offset printing or resin letterpress printing, such that the ink extremely decreases fluidity or increases viscosity and tack. On the other hand, in the case of a printing ink according to the present invention, even where the ratio of a pigment component is set higher, no problems arise. As a consequence, it is possible to obtain a printed matter with high concentration and high hiding properties by offset printing or resin letterpress printing.

As a preferable ink composite for forming a printed matter with high concentration and high hiding properties by offset printing or resin letterpress printing, the following ink composite of the electron beam curable type may be used. Specifically, with reference to the entire ink composite, it contains a pigment by 20 to 45 mass%, saturated polyester resin by 10 to 40 mass%, and monomer by 10 to 50 mass%, wherein the saturated polyester resin is soluble into any one of solvents of dichloro benzene, isooctyl alcohol, butyronitrile, and diacetone alcohol.

Such an ink composite can form a strong cured layer by electron beam irradiation. Since the compatibility between the pigment component and binder component is high, no problems arise even where the concentration of a pigment component is set higher.

The saturated polyester resin preferably contains a polyol and a hydrogenated aromatic polybasic acid as condensed components. The content of the saturated polyester resin is preferably set to fall in a range of from 15 to 35 mass%.

The polyol used in the saturated polyester resin is preferably at least one selected from polyalkylene glycol and hydrogenated bisphenol. The polyalkylene glycol is preferably poly($C_1$ to $C_{20}$)-alkylene glycol, and more preferably poly($C_4$ to $C_{12}$)-alkylene glycol. The hydrogenated bisphenol may be exemplified by hydrogenated bisphenol-A, and hydrogenated bisphenol-F. Other polyol examples suitably usable may be hydrogenated bisphenol-A diethylene oxide, hydrogenated bisphenol-F diethylene oxide, hydrogenated bisphenol-A dipropylene oxide, hydrogenated bisphenol-F dipropylene oxide, trimethylolpropane, neopentyl glycol, pentaerythritol, glycerine, dicyclopentadieneallyl alcohol, and hydrogenated dicyclopentadieneallyl alcohol polymer.

The hydrogenated aromatic polybasic acid used in the saturated polyester resin may be exemplified by tetrahydro phthalic acid, hexahydro phthalic acid, dihydro phthalate, and their anhydrides. Other examples suitably usable may be compounds of other aromatic polybasic acids and their anhydrides, such as O-phthalic acid, isophthalic acid, terephthalic acid, and hydrogenated polymerized rosin.

The compounding ratio between the polybasic acid and polyol in the resin is set such that [hydroxyl group in polyol]/[carboxylic acid in polybasic acid] preferably falls in a range of from 0.5 to 1.5, and more preferably of from 0.9 to 1.1.

The saturated polyester resin may be formed by mixing the polyol and aromatic polybasic acid at a ratio of OH/COOH = 0.8 to 1.2, and esterifying them at a temperature of from 150 to 300°C, and preferably of from 180 to 240°C, to obtain an acid value of 20 or less, and preferably of 4 or less. The weight-average molecule weight of the saturated polyester resin is preferably set to satisfy $M_w$ = 1000 to 100000.

The coloring component content in the ink is suitably determined within the range described above, in accordance with the design of a printed matter, and necessary hiding properties and concentration feeling.

Where such a printing ink to be cured by the electron beam, which is typically an electron beam curable ink, is used to manufacture a printed matter, an ink layer is formed on a substrate by letterpress printing or lithographic printing, and is then irradiated with an electron beam. In this case, the thickness of the ink layer is set to be 5 μm or less in general.

An electron beam used to cure an electron beam curable ink is preferably a low energy beam of 150 kV or less, and more preferably of 30 to 100 kV in light of the influence of the electron beam about deterioration of a substrate. In consideration of the relationship between the acceleration voltage of an electron beam and penetration depth shown in FIG. 1, it is preferable to set a suitable value of the acceleration voltage within the range described above, in accordance with the thickness of an ink layer, to which an electron beam is applied. The irradiation dose of an electron beam is suitably chosen in accordance with ink components and a process speed necessary for curing, and is preferably set at 5 to 50 kGy, and more preferably at 10 to 30 kGy, in general.

As described above, an electron beam irradiation apparatus to cure a printing ink according to the present invention may be also exemplified by apparatuses of curtain beam type, area beam type, broad beam type, scanning beam type, vacuum tube type, and so forth. Of them, an electron beam irradiation apparatus of the vacuum tube type having the structure described above is preferably employed.

The substrate of a printed matter using a printing ink according to the present invention is not limited to a specific one, but may be a material of any kind, such as paper, plastic, or metal. Particularly, a heat shrinkable plastic film described above is preferably used as a substrate, on which the ink is printed to manufacture a shrinkable film having a print layer with a high concentration and high hiding properties.

Furthermore, as described above, an electron beam entails no heat generation, and thus can be applied to a substrate easily affected by heat, such as a heat shrinkable film of polystyrene, polypropylene, or polyester, which is used as a shrink label for a plastic bottle or the like. Where an ink is printed on a transparent film, backing printing is preferably used. With this technique, the film can have higher concentration feeling. In addition, after an ink layer is formed by printing, a transparent and smooth coating film, such as overprint varnish, is preferably coated. Also with this technique, the film can have higher concentration feeling.

A printing ink according to the present invention is also suitable for printing on so-called dummy bodies or trade samples, such as beverage cans and PET bottles, displayed in vending machines. Vending machines are used for selling beverages cans or plastic bottles of beer, coffee, tea, and juice, and tobacco and dry-cell battery.

A dummy body is displayed on the front side of a vending machine, in place of an authentic beverage can or beverage bottle to be sold, and is formed of a molded body resembling a can or bottle that has a size and shape close to the authentic thing. A label attached to such a dummy body has the same design and color print as those of the authentic thing, provided on, e.g., a film or sheet of plastic or paper. Since purchasers choose products to buy, with reference to the dummy body labels, the print quality of dummy body labels is very important in sale through vending machines. In light of increase in sales, the print quality of dummy body labels is required to be higher than ordinary printed matters. Furthermore, dummy bodies are illuminated by panel lamps disposed in a vending machine, so that they can be well observed even at night. This illumination includes a reflection type in which light is radiated from the front side of dummy bodies, and a transmission type in which light is radiated from the back side of dummy bodies. During daytime, dummy bodies are observed by sunlight reflection. In either of the types described above, unless the print layer on a label has a high pigment concentration and high hiding properties relative to light, it is difficult to obtain the print effects of being beautiful to the eye and having certain concentration feeling. Particularly, the transmission type requires a higher pigment concentration and higher hiding properties relative to light, as compared to the reflection type. Furthermore, dummy bodies need to have high light-resistance,

In this respect, a printing ink according to the present invention has a high pigment concentration and high hiding properties relative to light, and thus can sufficiently provide dummy bodies, to which the ink is applied, with the print effects of being beautiful to the eye and having certain concentration feeling. In addition, if the printing ink contains ultraviolet absorption agent, the dummy bodies can have high light-resistance.

A dummy body may be formed of a container body with a printed label attached thereon, or a container body with a direct print formed thereon. It is however preferable to prepare a dummy body formed of a container body with a shrinkable film attached thereon, which uses a printing ink according to the present invention.

Examples

An explanation will be given of examples according to the present invention. In the following description, the terms "part" and "%" denote "part of mass" and "mass%", respectively. Examples 1 to 4 and a comparative example 1 relate to a shrinkable film, and examples 5 and thereafter and comparative examples 2 and thereafter relate to a printing ink.

(Example 1)

An offset ink of the electron beam curable type was prepared by mixing 45 parts of a varnish, 15 parts of a cyan pigment (LIONOL BLUE FG7330 from Toyo Ink Mfg. Co., Ltd.), 25 parts of dipentaerythritol hexaacrylate, and 15 parts of pentaerythritol tetraacrylate, and dispersing the mixture by a three-roll mill. The varnish was made of 74.9% dipentaerythritol hexaacrylate, 0.1% hidroquinone, and 25% DT150 (diallyl phthalate resin from Tohto Kasei Co., Ltd.). The ink was applied onto a heat shrinkable polyester film (40 μm of HISHI PET LX-10-Y from Mitsubishi Plastics, Ltd.) by offset printing, and was then cured within a nitrogen gas atmosphere, using an electron beam irradiation apparatus of the vacuum tube type from UIT Inc., (which will be referred to as a Min-EB), at an acceleration voltage of 50 kV and an irradiation dose of 35 kGy (kilo Gray).

The ink showed a sufficient curing level, and the film was not crinkled or warped by the electron beam irradiation. The processed film showed good heat shrinkage and no problem in design quality when it was shrunk.

(Example 2)

A varnish for coating was prepared by mixing and stirring 25 parts of three-functional urethane acrylate, 25 parts of tripropylene glycol diacrylate, 35 parts of trimethylolpropane (propylene oxide) acrylate, and 15 parts of 2-acryloyloxypropyl hydrogen phthalate, using a disper. The varnish for coating was applied to have a layer thickness of about 5 μm onto a heat shrinkable polystyrene film (60 μm of BONSET EPS62 from C.I. Kasei Co., Ltd.) by flexo printing, using an anilox roll with a line number of 300L, and was then cured within a nitrogen gas atmosphere, using the Min-EB apparatus, at an acceleration voltage of 50 kV and an irradiation dose of 30 kGy.

The varnish showed a sufficient curing level, and the film was not crinkled or warped by the electron beam irradiation. The processed film showed good heat shrinkage and no problem in design quality when it was shrunk.

(Example 3)

A heat shrinkable polopropylene film (30 μm of PYLEN film-OT P6183 from Toyobo Co., Ltd.) was irradiated, using the Min-EB apparatus, at an acceleration voltage of 50 kV and an irradiation dose of 50 kGy. Then, an ink was applied onto the film by offset printing and cured as in the example 1.

The ink showed a sufficient curing level, and the film was not crinkled or warped by the electron beam irradiation. The processed film showed good heat shrinkage and no problem in design quality when it was shrunk. Furthermore, the ink and film showed good adhesiveness therebetween.

(Example 4)

An ink was printed as in the example 1, and was cured, using a CURETRON EBC-200-20-30 from Nishin High Voltage Corporation as an EB irradiation apparatus, at an acceleration voltage of 175kV.

The ink showed a good curing level, and the film was good in terms of crinkles and warps. However, as compared to the examples 1 to 3, the processed film showed weak heat shrinkage and was lower in design quality when it was shrunk. It is thought to be so, because the examples 1 to 3 used low acceleration voltages, while the example 4 used a higher acceleration voltage.

(Comparative example 1)

An UV curable ink was prepared by mixing 100 parts of the same ink as that used in the example 1 with 3 parts of IRGACURE 901 (from Ciba-Geigy Ltd.) as a photoinitiator, and 1 part of EAB as sensitizer. Then, the ink was cured, using a metal halide lamp of 160 W/cm at an exposure dose of 30 mJ/cm$^2$.

The ink showed a sufficient curing level, but the film was crinkled or warped. The processed film was lower in design quality when it was shrunk.

(Example 5)

The following ink 1 was printed to have a thickness 1 $\mu$m onto a commercially available polyethylene terephthalate (PET) film having a thickness of 50 $\mu$m (with a print face subjected to corona treatment in advance), using a printing test machine (RI tester), which was a simplified printing machine commonly used in the printing ink industry. After printing, the ink was irradiated with an electron beam to form a cured layer, using the Min-EB apparatus. The electron beam irradiation was performed under the conditions of an acceleration voltage of 50 kV, irradiation dose of 30 kGy, and irradiation atmosphere of a nitrogen gas atmosphere (with an oxygen concentration of 200 ppm).

Ink 1

A varnish was prepared by melting 50 parts of trimethylolpropane triacrylate, 9.9 parts of ditrimethylolpropane tetraacrylate, 0.1 parts of hidroquinone, and 40 parts of diallyl phthalate resin ("DT150" from Tohto Kasei Co., Ltd.), at 100°C. Then, a lithographic printing ink 1 of the electron beam curable type was prepared by dispersing 55 parts of the varnish thus prepared, 35 parts of PV fast yellow HG (a yellow pigment from Clariant Ltd.), and 10 parts of pentaerythritol tetraacrylate monomer, using a three-roll mill.

The transmittance density of an obtained cured layer was measured, and the curing level and to-substrate-adhesiveness thereof were examined, as follows. At this time, the curing level and to-substrate-adhesiveness were examined one-day after the irradiation. Table 1 shows values of the transmittance density, and the result of examination on the curing level and to-substrate-adhesiveness. It should be noted that, where the printed matter was visually observed from the film side, the concentration feeling was apparently higher, as compared the case where it was visually observed from the ink side.

[Measurement of transmittance density]

The transmittance density of the obtained cured layer was measured from transmission light through the layer, using a "Macbeth TR927" from Macbeth Co., Ltd., which was a concentration-measuring machine for both of transmittance and reflectance. In this measuring, the surface of the obtained cured layer was irradiated with light in the vertical direction, and the intensity of transmitted light therefrom was measured. Then, the transmittance density was calculated in accordance the equation (1) described above.

[Examination on curing level]

1. Dryness test by finger touch

This used evaluation on a five-to-zero scale, i.e., completely cured "5" to not cured "1".

2. Abrasion-resistance test on a print surface by fingernails (which will be referred to as a scratch test, hereinafter)

This used evaluation on a five-to-zero scale, i.e., good "5" to bad "1".

3. MEK rubbing test

This was performed by gently rubbing a print surface with a cotton bud containing methylethyl ketone, and measuring the number of rubbing actions up to the underlaying being exposed.

[Examination on to-substrate-adhesiveness]

The to-substrate-adhesiveness was tested by peeling an adhesive cellophane tape (which will be referred to as a cellophane tape adhesiveness test, hereinafter).
This used evaluation on a five-to-zero scale, i.e., completely adhered "5" to poorly adhered "1".

(Examples 6 to 8)

In place of the electron beam curable ink employed in the example 5, the example 6 employed the following ink 2, the example 7 employed the following ink 3, and the example 8 employed the following ink 4. Each of these inks was printed in the same way as the example 5, and was irradiated with an electron beam under the same conditions as the example 5, to form a cured layer. The transmittance density of the obtained cured layer was measured in the same way as the example 5, and the curing level and to-substrate-adhesiveness thereof were examined in the same way as the example 5. Table 1 shows values of the transmittance density, and the result of examination on the curing level and to-substrate-adhesiveness.

Ink 2

A lithographic printing ink 2 of the electron beam curable type was prepared at a pigment concentration of 30%, using Novaperm carmine HF4CN (a magenta pigment from Clariant Ltd.) in place of the coloring component of the ink 1.

Ink 3

A varnish was prepared by melting 30 parts of trimethylolpropane triacrylate, 20 parts of dipentaerythritol hexaacrylate, 9.9 parts of ditrimethylolpropane tetraacrylate, 0.1 parts of hydroquinone, and 40 parts of diallyl phthalate resin ("DT150" from Tohto Kasei Co., Ltd.), at 100°C. Then, a lithographic printing ink 3 of the electron beam curable type was prepared by dispersing 60 parts of the varnish thus prepared, 30 parts of LIONOL Blue FG7330 (a cyan pigment from Toyo Ink Mfg. Co., Ltd.), and 10 parts of pentaerythritol tetraacrylate monomer, using a three-roll mill.

Ink 4

A lithographic printing ink 4 of the electron beam curable type was prepared at a pigment concentration of 35%, using Mitsubishi Carbon #25 (a black pigment from Mitsubishi Chemical Co.) in place of the coloring component of the ink 1.

(Comparative examples 2 to 5)

Each of electron beam curable inks the same as those of the examples 5 to 8 (including no photoinitiators) was printed in the same way as the example 5, and was then irradiated with ultraviolet rays to obtain a printed matter. The ultraviolet ray irradiation was performed, using a metal halide lamp of 160 W/cm at an exposure dose of 30 mJ/cm$^2$. The transmittance density of an obtained cured layer was measured in the same way as the example 5, and the curing level and to-substrate-adhesiveness thereof were examined in the same way as the example 5. Table 1 shows values of the transmittance density, and the result of examination on the curing level and to-substrate-adhesiveness.

(Comparative examples 6 to 9)

Ultraviolet curable inks were prepared by respectively mixing and dispersing 100 parts of inks the same as those of the examples 5 to 8 with 5 parts of a photoinitiator ("IRGACURE 907" from Ciba Specialty Chemicals K.K.). Each of the ultraviolet curable inks was printed in the same way as the example 5, and was then irradiated with ultraviolet rays under the same conditions as the comparative examples 2 to 5 to obtain a printed matter. The transmittance density of an obtained layer was measured in the same way as the example 5, and the curing level and to-substrate-adhesiveness thereof were examined in the same way as the example 5. Table 1 shows values of the transmittance density, and the result of examination on the curing level and to-substrate-adhesiveness.

(Comparative examples 10 to 13)

Each of inks the same as those of the comparative examples 6 to 9 was printed in the same way as the comparative examples 6 to 9, except for the thickness being 0.5 μm, and was then irradiated with ultraviolet rays under the same conditions as the comparative examples 2 to 5 to obtain a printed matter. The transmittance density of an obtained layer was measured in the same way as the example 5, and the curing level and to-substrate-adhesiveness thereof were examined in the same way as the example 5. Table 1 shows values of the transmittance density, and the result of examination on the curing level and to-substrate-adhesiveness.

(Comparative examples 14 to 17)

Each of commercially available ultraviolet curable inks, FDO New Light Fastness yellow RTW-B, FDO New Light Fastness red RTW-B, FDO New blue RTW-B, and FDO New black RTW-B (all from Toyo Ink Mfg. Co., Ltd.) was printed in the same way as the example 1, and was then irradiated with ultraviolet rays under the same conditions as the comparative examples 2 to 5 to obtain a printed matter. The transmittance density of an obtained layer was measured in the same way as the example 5, and the curing level and to-substrate-adhesiveness thereof were examined in the same way as the example 5. Table 1 shows values of the transmittance density, and the result of examination on the curing level and to-substrate-adhesiveness.

Table 1

| | | Example of the Present Invention | | | | Comparative Example | | | | | | | | | | | | | | | |
|---|---|---|---|---|---|---|---|---|---|---|---|---|---|---|---|---|---|---|---|---|---|---|
| | | 5 | 6 | 7 | 8 | 2 | 3 | 4 | 5 | 6 | 7 | 8 | 9 | 10 | 11 | 12 | 13 | 14 | 15 | 16 | 17 |
| Ink | Employed Ink | *1 | *2 | *3 | *4 | *1 | *2 | *3 | *4 | *1 | *2 | *3 | *4 | *1 | *2 | *3 | *4 | *5 | *6 | *7 | *8 |
| | Pigment (Coloring Component) (%) | 35 | 30 | 30 | 35 | 35 | 30 | 30 | 35 | 35 | 30 | 30 | 35 | 35 | 30 | 30 | 35 | 15-20 | 15-20 | 15-20 | 15-20 |
| | Transmittance Density | 0.42 | 0.79 | 1.1 | 1.0 | 0.40 | 0.75 | 1.0 | 0.99 | 0.41 | 0.78 | 1.0 | 1.0 | 0.22 | 0.32 | 0.49 | 0.38 | 0.21 | 0.39 | 0.58 | 0.48 |
| Physical Property | Finger Touch Dryness Test | 5 | 5 | 5 | 5 | 1 | 1 | 1 | 1 | 2 | 2 | 2 | 2 | 4 | 5 | 5 | 4 | 5 | 5 | 5 | 5 |
| | Scratch Test | 5 | 5 | 5 | 5 | 1 | 1 | 1 | 1 | 2 | 2 | 2 | 2 | 4 | 5 | 5 | 4 | 5 | 5 | 5 | 5 |
| | MEK Rubbing Test | >100 | >100 | >100 | >100 | <10 | <10 | <10 | <10 | 20 | 25 | 15 | 15 | >100 | >100 | >100 | >100 | >100 | >100 | >100 | >100 |
| | Cellophane Tape Adhesiveness | 5 | 5 | 5 | 5 | 1 | 1 | 1 | 1 | 2 | 2 | 2 | 1 | 3 | 3 | 3 | 2 | 5 | 5 | 5 | 4 |

*1 Ink 1
*2 Ink 2
*3 Ink 3
*4 Ink 4
*5 Ultraviolet Curable Ink FDO New Light Fastness Yellow RTW-B (from Toyo Ink Mfg. Co., Ltd.)
*6 Ultraviolet Curable Ink FDO New Light Fastness Red RTW-B (from Toyo Ink Mfg. Co., Ltd.)
*7 Ultraviolet Curable Ink FDO New Blue RTW-B (from Toyo Ink Mfg. Co., Ltd.)
*8 Ultraviolet Curable Ink FDO New Black RTW-B (from Toyo Ink Mfg. Co., Ltd.)

As shown in Table 1, the examples 5 to 8, which employed electron beam curing, were good in the curing level and to-substrate-adhesiveness, even where they had large coloring component contents and showed high values of the transmittance density. By contrast, the comparative examples 2 to 9, which employed ultraviolet ray irradiation, brought about insufficiently cured layers, as well as low values of the to-substrate-adhesiveness. The comparative examples 10 to 13, which employed ultraviolet ray irradiation on a layer having a thickness of 0.5 µm, were almost good in the layer curing level because the layer was thin, but were low in the to-substrate-adhesiveness. Furthermore, they were low in the transmittance density, and thus did not provide high concentration feeling. The comparative examples 14 to 17, which employed commercially available ultraviolet curable inks, were good in the curing level and adhesiveness, but they had small coloring component contents, and thus did not provide high concentration feeling.

(Example 9)

Each of inks 1 to 4 the same as those of the examples 5 to 8 was applied onto an OK topcoat (art paper from Oji Paper Co., Ltd.) by the wet-on-wet method by lithographic printing, using a rotary printing machine of the Center Impression (CI) type, and was then irradiated with an electron beam (at an irradiation dose of 50 kGy) at the same acceleration voltage as the example 1 to obtain a multicolor printed matter. The obtained printed matter was examined, using the dryness test, scratch test, MEK rubbing test, and cellophane tape adhesiveness test. The result was good in each of these tests.

(Example 10)

An overcoat layer of FD KARTON ACE OP varnish B (an overcoat varnish from Toyo Ink Mfg. Co., Ltd.) was formed by an RI tester to have a thickness of 1 µm, on the ink of a printed matter prepared in the same way as the example 9, and was irradiated with ultraviolet rays under the same conditions as the comparative examples. As a consequence, the printed matter was higher in the concentration feeling in visual observation, as compared to the printed matter of the example 9.

(Example 11)

A lithographic printing ink of the electron beam curable type was prepared by using 31 parts of varnish the same as that of the example 5, TIPAQUE R630 (from Ishihara Sangyo Kaisha, Ltd.), 3 parts of talc, 1 part of calcium carbonate, and 10 parts of a monomer, in the same way as the example 5. The ink thus obtained was printed in the same way as the example 5, and was then irradiated with an electron beam (at an irradiation dose of 50 kGy) at the same acceleration voltage as the present example 5. The obtained printed matter was examined, using the dryness test, scratch test, MEK rubbing test, and cellophane tape adhesiveness test. The result was good in each of these tests.

**Claims**

1. A shrinkable film comprising a substrate of a heat shrinkable plastic film, and a coating layer formed from a coating material of an electron beam curable type printed or coated on the substrate and cured by electron beam irradiation.

2. The shrinkable film according to claim 1, wherein the coating material is a printing ink to be cured by an electron beam for letterpress printing or lithographic printing, which has a coloring component content falling in a range of from 20 to 70 mass%.

3. The shrinkable film according to claim 2, wherein the coating material contains a coloring component of a white pigment or metal pigment, and has a coloring component content falling in a range of from 40 to 70 mass%.

4. The shrinkable film according to claim 2, wherein the coating material contains a coloring component other than either white pigment or metal pigment, and has a coloring component content falling in a range of from 20 to 50 mass%.

5. The shrinkable film according to claim 1, wherein the coating material is a printing ink to be cured by an electron beam for letterpress printing or lithographic printing, which has a transmittance density of 0.3 or more as a yellow ink, 0.5 or more as a magenta ink, 0.7 or more as a cyan ink, or 0.6 or more as a black ink, where the ink is printed to have a thickness of 1 µm.

**6.** A method of manufacturing a shrinkable film, comprising:

    printing or coating a coating material of an electron beam curable type onto a substrate of a heat shrinkable plastic film; and
    irradiating the printed or coated coating material with an electron beam, thereby curing the coating material.

**7.** The method according to claim 6, wherein the electron beam is set at an acceleration voltage of 120 kV or less.

**8.** The method according to claim 6, wherein an electron beam irradiation apparatus of a vacuum tube type is used.

**9.** A method of manufacturing a shrinkable film, comprising:

    irradiating a substrate of a heat shrinkable plastic film with an electron beam, and
    then printing or coating a coating material onto the substrate.

**10.** The method according to claim 9, wherein the coating material is a coating material of an electron beam curable type.

**11.** A printing ink for letterpress printing or lithographic printing, which is a printing ink to be cured by an electron beam and has a coloring component content falling in a range of from 20 to 70 mass%.

**12.** The printing ink according to claim 11, which contains a coloring component of a white pigment or metal pigment, and has a coloring component content falling in a range of from 40 to 70 mass%.

**13.** The printing ink according to claim 11, which contains a coloring component other than either white pigment or metal pigment, and has a coloring component content falling in a range of from 20 to 50 mass%.

**14.** The printing ink according to claim 11, wherein the letterpress printing includes flexo printing, and the lithographic printing includes offset printing.

**15.** A printing ink for letterpress printing or lithographic printing, which is a printing ink to be cured by an electron beam and has a transmittance density of 0.3 or more as a yellow ink, 0.5 or more as a magenta ink, 0.7 or more as a cyan ink, or 0.6 or more as a black ink, where the ink is printed to have a thickness of 1 $\mu$m.

**16.** The printing ink according to claim 15, wherein the letterpress printing includes flexo printing, and the lithographic printing includes offset printing.

**17.** A printed matter comprising an article to be printed and an ink layer, wherein the ink layer is formed from a printing ink to be cured by an electron beam for letterpress printing or lithographic printing, which has a coloring component content falling in a range of from 20 to 70 mass%; and the printing ink is applied onto the article by letterpress printing or lithographic printing and is cured by irradiation with the electron beam to form the ink layer.

**18.** The printed matter according to claim 17, wherein the printing ink contains a coloring component of a white pigment or metal pigment, and has a coloring component content falling in a range of from 40 to 70 mass%.

**19.** The printed matter according to claim 17, wherein the printing ink contains a coloring component other than either white pigment or metal pigment, and has a coloring component content falling in a range of from 20 to 50 mass%.

**20.** The printed matter according to claim 17, wherein the letterpress printing includes flexo printing, and the lithographic printing includes offset printing.

**21.** The printed matter according to claim 17, wherein the electron beam is set at an acceleration voltage of 150 kV or less.

**22.** The printed matter according to claim 17, wherein the article comprises a transparent substrate, and the printing ink is applied onto the transparent substrate by backing printing.

**23.** The printed matter according to claim 17, further comprising a transparent and smooth film covering the ink layer.

24. The printed matter according to claim 17, wherein the article comprises a heat shrinkable plastic film.

25. A printed matter comprising an article to be printed and an ink layer, wherein the ink layer is formed from a printing ink to be cured by an electron beam for letterpress printing or lithographic printing, which has a transmittance density of 0.3 or more as a yellow ink, 0.5 or more as a magenta ink, 0.7 or more as a cyan ink, or 0.6 or more as a black ink, where the ink is printed to have a thickness of 1 μm; and the printing ink is applied onto the article by letterpress printing or lithographic printing and is cured by irradiation with the electron beam to form the ink layer.

26. The printed matter according to claim 25, wherein the printing ink contains a coloring component of a white pigment or metal pigment, and has a coloring component content falling in a range of from 40 to 70 mass%.

27. The printed matter according to claim 25, wherein the printing ink contains a coloring component other than either white pigment or metal pigment, and has a coloring component content falling in a range of from 20 to 50 mass%.

28. The printed matter according to claim 25, wherein the letterpress printing includes flexo printing, and the lithographic printing includes offset printing.

29. The printed matter according to claim 25, wherein the electron beam is set at an acceleration voltage of 150 kV or less.

30. The printed matter according to claim 25, wherein the article comprises a transparent substrate, and the printing ink is applied onto the transparent substrate by backing printing.

31. The printed matter according to claim 25, further comprising a transparent and smooth film covering the ink layer.

32. The printed matter according to claim 25, wherein the article comprises a heat shrinkable plastic film.

33. A method of manufacturing a printed matter, comprising:

   printing with a printing ink onto an article to be printed by letterpress printing or lithographic printing, the printing ink being a printing ink to be cured by an electron beam for letterpress printing or lithographic printing, which has a coloring component content falling in a range of from 20 to 70 mass%; and
   irradiating an ink layer thus printed with the electron beam, thereby curing the ink layer.

34. The method according to claim 33, wherein the electron beam is set at an acceleration voltage of 150 kV or less.

35. A method of manufacturing a printed matter, comprising:

   continuously printing with different color printing inks onto an article to be printed to perform multicolor printing by letterpress printing or lithographic printing, each of the printing inks being a printing ink to be cured by an electron beam for letterpress printing or lithographic printing, which has a coloring component content falling in a range of from 20 to 70 mass%; and
   irradiating ink layers of the printing inks with the electron beam after forming all of the ink layers of the printing inks, thereby curing the ink layers.

36. The method according to claim 35, wherein the electron beam is set at an acceleration voltage of 150 kV or less.

37. A method of manufacturing a printed matter, comprising:

   printing with a printing ink onto an article to be printed by letterpress printing or lithographic printing, the printing ink being a printing ink to be cured by an electron beam for letterpress printing or lithographic printing, which has a transmittance density of 0.3 or more as a yellow ink, 0.5 or more as a magenta ink, 0.7 or more as a cyan ink, or 0.6 or more as a black ink, where the ink is printed to have a thickness of 1 μm; and
   irradiating an ink layer thus printed with the electron beam, thereby curing the ink layer.

38. The method according to claim 37, wherein the electron beam is set at an acceleration voltage of 150 kV or less.

39. A method of manufacturing a printed matter, comprising:

continuously printing with different color printing inks onto an article to be printed to perform multicolor printing by letterpress printing or lithographic printing, each of the printing inks being a printing ink to be cured by an electron beam for letterpress printing or lithographic printing, which has a transmittance density of 0.3 or more as a yellow ink, 0.5 or more as a magenta ink, 0.7 or more as a cyan ink, or 0.6 or more as a black ink, where the ink is printed to have a thickness of 1 $\mu$m; and
irradiating ink layers of the printing inks with the electron beam after forming all of the ink layers of the printing inks, thereby curing the ink layers.

**40.** The method according to claim 39, wherein the electron beam is set at an acceleration voltage of 150 kV or less.

FIG.1

FIG.2A

FIG.2B

## INTERNATIONAL SEARCH REPORT

| International application No. |
|---|
| PCT/JP03/06985 |

A. CLASSIFICATION OF SUBJECT MATTER
    Int.Cl⁷ B32B27/00, 7/02, C09D4/00, 11/10, B41M1/00

According to International Patent Classification (IPC) or to both national classification and IPC

B. FIELDS SEARCHED

Minimum documentation searched (classification system followed by classification symbols)
    Int.Cl⁷ B32B1/00-35/00, C09D1/00-201/10, C08J7/04-7/06

Documentation searched other than minimum documentation to the extent that such documents are included in the fields searched
    Jitsuyo Shinan Koho          1926-1996     Toroku Jitsuyo Shinan Koho     1994-2003
    Kokai Jitsuyo Shinan Koho    1971-2003     Jitsuyo Shinan Toroku Koho     1996-2003

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 5-57790 A (Dainippon Printing Co., Ltd.),<br>09 March, 1993 (09.03.93),<br>All references<br>(Family: none) | 1,6-10<br>1-40 |
| X<br><br>Y | JP 2000-302997 A (Toyo Ink Manufacturing Co.,<br>Ltd.),<br>31 October, 2000 (31.10.00),<br>All references<br>(Family: none) | 11-22,25-30,<br>33-40<br>1-40 |
| X<br><br>Y | JP 57-14663 A (Dainippon Printing Co., Ltd.),<br>25 January, 1982 (25.01.82),<br>All references<br>(Family: none) | 11-22,25-30,<br>33-40<br>1-40 |

[X] Further documents are listed in the continuation of Box C.     [ ] See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 29 August, 2003 (29.08.03) | 16 September, 2003 (16.09.03) |

| Name and mailing address of the ISA/<br>    Japanese Patent Office | Authorized officer |
|---|---|
| Facsimile No. | Telephone No. |

Form PCT/ISA/210 (second sheet) (July 1998)

**EP 1 514 680 A1**

## INTERNATIONAL SEARCH REPORT

International application No.

PCT/JP03/06985

| C (Continuation). DOCUMENTS CONSIDERED TO BE RELEVANT | | |
|---|---|---|
| Category* | Citation of document, with indication, where appropriate, of the relevant passages | Relevant to claim No. |
| Y | JP 2000-338880 A (Fuji Seal,Inc.),<br>08 December, 2000 (08.12.00),<br>All references<br>(Family: none) | 1-40 |
| A | JP 9-241563 A (Dainippon Printing Co., Ltd.),<br>16 September, 1997 (16.09.97),<br>All references<br>(Family: none) | 1-40 |
| A | JP 10-81719 A (Nippon Kayaku Co., Ltd.),<br>31 March, 1998 (31.03.98),<br>All references<br>(Family: none) | 1-40 |
| A | JP 10-130559 A (Dainippon Ink And Chemicals, Inc.),<br>19 May, 1998 (19.05.98),<br>All references<br>(Family: none) | 1-40 |
| A | JP 6-128520 A (The Inktec Kabushiki Kaisha),<br>10 May, 1994 (10.05.94),<br>All references<br>(Family: none) | 1-40 |

Form PCT/ISA/210 (continuation of second sheet) (July 1998)

22